# EUROPEAN PATENT SPECIFICATION

(11) **EP 0 461 588 B1**
(45) Date of publication and mention of the grant of the patent: **08.09.1999**
(21) Application number: 91109482.9
(22) Date of filing: 10.06.1991
(51) Int. Cl.: F01L 7/06, F02M 35/06, F02B 61/02

(54) **A combination of motorcycle and two stroke cycle internal combustion engine**
Kombination eines Motorrades und einer Zweitaktbrennkraftmaschine
Combinaison de motocyclette et de moteur à combustion interne deux temps

(30) Priority: 09.06.1990 JP 15091690
(43) Date of publication of application: 18.12.1991
(73) Proprietor: YAMAHA HATSUDOKI KABUSHIKI KAISHA, Iwata-shi Shizuoka-ken, 438 (JP)
(72) Inventor: Shiobara, Shoichi, c/o 2500 Shingai, Shizuoka-ken 438 (JP)
(74) Representative: Grünecker, Kinkeldey, Stockmair & Schwanhäusser Anwaltssozietät

(56) References cited:
- GB-A- 2 145 471
- P.E. IRVING: "Motorcycle Engineering", 1st September 1973, Clymer Publications, Los Angeles, CA, US;

## Description

This invention relates to a combination of motorcycle and two-stroke cycle internal combustion engine, said engine being inbuilt as a transverse engine having a crankshaft disposed transversely to the longitudinal centre line of the motorcycle, an intake apparatus including an intake port formed in the side of the engine for delivering an intake charge to said engine, a rotary valve plate rotatably journaled relative to said intake port for sequentially opening and closing said intake port, and drive means for driving said rotary valve plate in sequence with said crankshaft.

Said combination is known from "Motorcycle Engineering" by P. E. Irving, published September 1, 1973 by Clymer Publications, Los Angeles, CA, USA, page 248, figure 13.5.

Further, GB 21 45 471 A discloses a two-stroke cycle internal combustion engine having an adjusting mechanism for the rotary position of the valve plate including a spring mechanism for biasing the plunger slidably received within the crankshaft towards one direction and a magnet attached to the inside of the crankcase in the prolongation of said plunger for attracting the same against the spring urging force. This arrangement considerably increases the length of the adjusting mechanism and accordingly the width of the engine causing problems as regards the leaning of the motorcycle.

The advantages of two cycle crankcase compression internal combustion engines are well known. One of the main advantages of this type of engine is the simplicity of the engine. Frequently these engines are operated with nothing more than a reed type check valve into the crankcase chamber and a porting arrangement that accommodates the transfer of the charge from the crankcase chamber to the combustion chamber of the engine. However, it has been recognized that performance may be improved, in some instances, through the use of some form of valve that rotates in unison with the crankshaft and which controls the opening and closing of a port that communicates the induction system with the crankcase chamber or the combustion chamber.

A wide variety of fixed type valve mechanisms have been proposed for this purpose. However, it has been acknowledged that the performance of the engine can be improved by employing a variable valve timing for such valves. The type of variable valve timing mechanism previously incorporated have utilized a pair of blade type rotating valve plates that move relative to each other to change the timing events. These types of device both retard the point at which the port opens and advance the time at which the port closes. However, it may not always be desirable to provide such extreme changes in both directions of port operation. Furthermore, the prior art type of arrangements have employed centrifugal governors for their operation and hence absorb power from the engine in order to achieve the valve operation and the change in timing.

One common application for two cycle engines is in motor cycles. In conjunction with motorcycle applications, if a rotary valve is employed it is the normal practice to induct the charge into the crankcase at one side of the crankcase. With the normal disposition of the engine in the motorcycle, this places the induction system at the side of the motorcycle. The disadvantage with such side placement is that the induction system may interfere with the amount at which the motorcycle can be leaned by the rider when cornering.

It is therefore an objective of the present invention to provide an improved combination as indicated above comprising an engine for the motorcycle with high performance in all phases of operation, specifically when the motorcycle is leant into the corner, and simultaneously to provide an improved and simplified induction system and fuel injection system with cooperating throttle valve arrangement which will be compact and yet easy to service.

According to the invention, this objective is solved for a combination as indicated above in that said drive means includes a helical connection for varying the angular position of said rotary valve plate relative to said crankshaft for adjusting the timing of opening and closing the intake port, said helical connection comprising a plunger slidably supported within the crankshaft and operated by an actuator lever, said actuator lever having a follower pin received in a grooved portion of said plunger, said actuator lever being affixed to a shaft, said shaft being rotatably joumaled within a boss formed in a flange, an actuating pulley being affixed to said shaft for providing a connection between said actuating pulley and said shaft, and a wire actuator connecting said actuating pulley to a power means, said power means being controlled by a CPU for varying valve timing in response to engine characteristics.

Other preferred embodiments of the present invention are laid down in further dependent claims.

### BRIEF DESCRIPTION OF THE DRAWINGS

Figure 1 is a side elevational view of a motorcycle powered by an internal combustion engine constructed in accordance with an embodiment of the invention, with portions broken away so as to more clearly show the construction.

Figure 2 is a front elevational view of the motorcycle, with portions shown in cross section and other portions shown in phantom and showing how the induction system lends itself to leaning of the motorcycle when cornering.

Figure 3 is an enlarged side elevational view of the engine.

Figure 4 is a cross-sectional view taken along the line 4-4 of Figure 3.

Figure 5 is a cross-sectional view taken along the line 5-5 of Figure 3.

Figure 6 is a cross-sectional view taken along the line 6-6 of Figure 3.

Figure 7 is a cross-sectional view taken along the line 7-7 of Figure 4.

Figure 8 is a cross-sectional view taken along the line 8-8 of Figure 3.

Figure 9 is a cross-sectional view taken along the line 9-9 of Figure 3.

Figure 10 is a cross-sectional view taken along the line 10-10 of Figure 9.

### DETAILED DESCRIPTION OF THE PREFERRED EMBODIMENT OF THE INVENTION

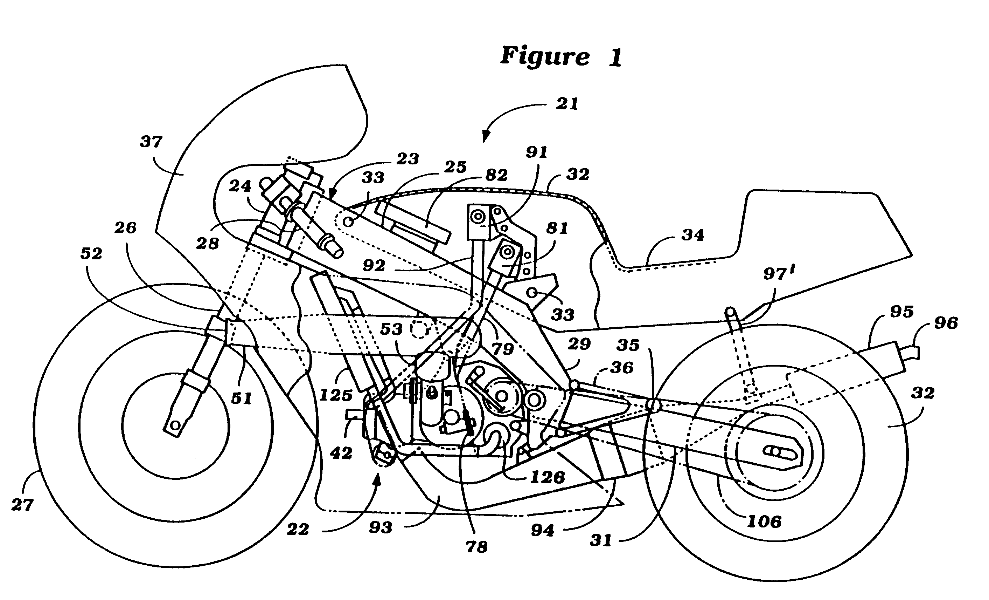

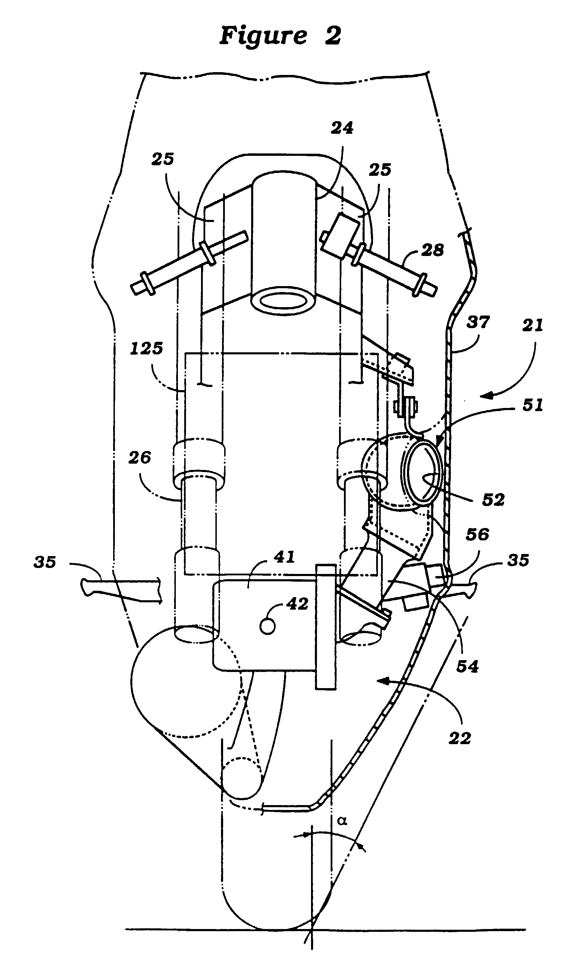

Referring now in detail to the drawings and initially to Figures 1 and 2, a motorcycle constructed in accordance with an embodiment of the invention is identified generally by the reference numeral 21. Although certain facets of the invention have particular utility in conjunction with motorcycles, the invention deals primarily with the powering internal combustion engine, indicated generally by the reference numeral 22 and specifically with the induction system for the engine 22. However, the application to a motorcycle is illustrated as this is a typical environment in which a two cycle engine of the type which will be described may be employed. Of course, the invention and certain facets of it may be employed in conjunction with other applications for engines and for other engine types than those will be specifically described.

The motorcycle 21 has a frame assembly, indicated generally by reference numeral 23, and which is a type that has a head pipe 24 and a pair of fabricated main frame members 25 that extend rearwardly and downwardly from the head pipe 24. A front fork assembly 26 is carried by the head pipe 24 for steering movement and rotatably journals a dirigible front wheel 27 in a known manner. A handlebar assembly 28 is carried at the upper end of the fork assembly 26 for steering of the front wheel 27 in a well known manner.

At the lower and rear ends of the main frame members 25 there is provided a weldment assembly 29 which provides a pivotal support for a trailing arm 31 that supports a rear wheel 32.

A combined seat and body member 32 is mounted on the frame assembly 23 in an appropriate manner, as by mounting points 33. The seat assembly 32 has a depressed portion 34 so as to accommodate a rider. A rider seated in the portion 34 may place his legs on foot pegs 35 carried by extensions 36 that are affixed appropriately to the weldment 29.

A body and cowling assembly 37 is carried forwardly and on the sides of the frame assembly 23 so as to offer streamlining and some wind protection for the rider.

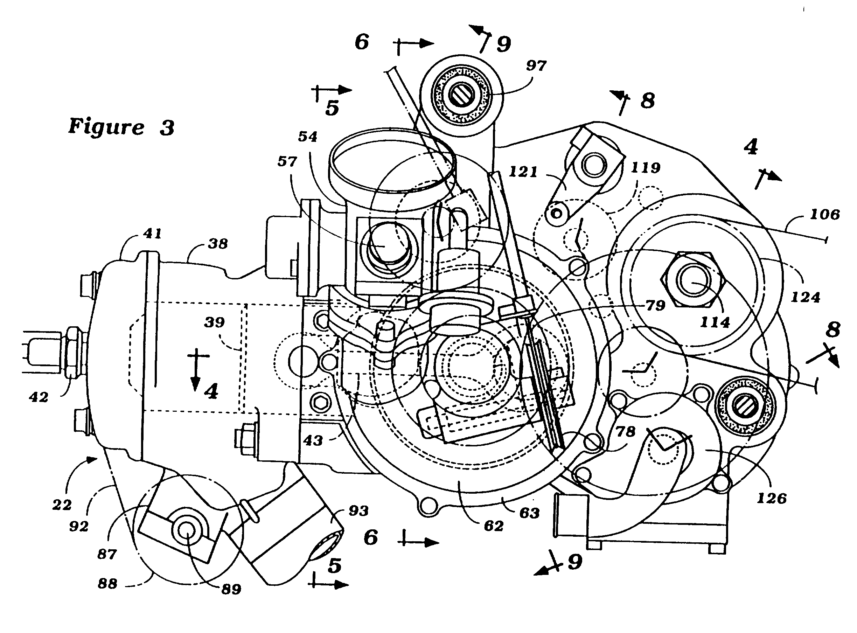

Referring now in detail primarily to Figures 3, 4 and 9, the engine 22 is, as aforenoted, of the two cycle crankcase compression type. In the illustrated embodiment, the engine 22 is a single cylinder engine but, as will be readily apparent, the invention may be employed in conjunction with engines having other cylinder types and cylinder orientations. However, certain facets of the invention have particular utility in engines of a type that are mounted in the motorcycle 21 so that the cylinder block, indicated generally by the reference numeral 38, extends horizontally with its cylinder bore (not shown) a mounting piston 39 that reciprocates about a generally longitudinal axis. This arrangement permits a low center of gravity, as should be readily apparent. A cylinder head assembly 41 is affixed to the cylinder block 38 in a known manner and mounts a spark plug 42 that extends generally in a forward direction and which is fired by an appropriate ignition system (not shown).

The piston 39 is connection to one end of the connecting rod 43 which connecting rod has its opposite end journaled on a throw of a crankshaft, indicated generally by the reference numeral 44. The crankshaft 44 is journaled, in the illustrated embodiment, by means of a pair of anti-friction bearings 45 and 46 within a crankcase chamber 47 formed by the cylinder block 38 and a combined crankcase transmission case, indicated generally by the reference numeral 49. As is conventional with motorcycle practice, the crankshaft 44 rotates about a horizontally disposed axis which extends generally transversely across the motorcycle 21 from side to side.

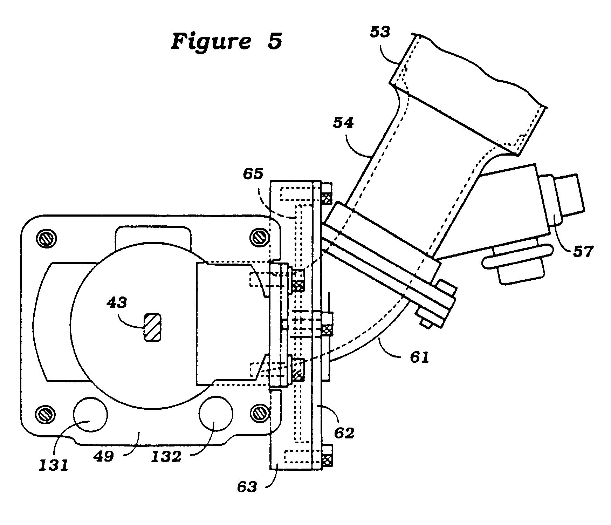

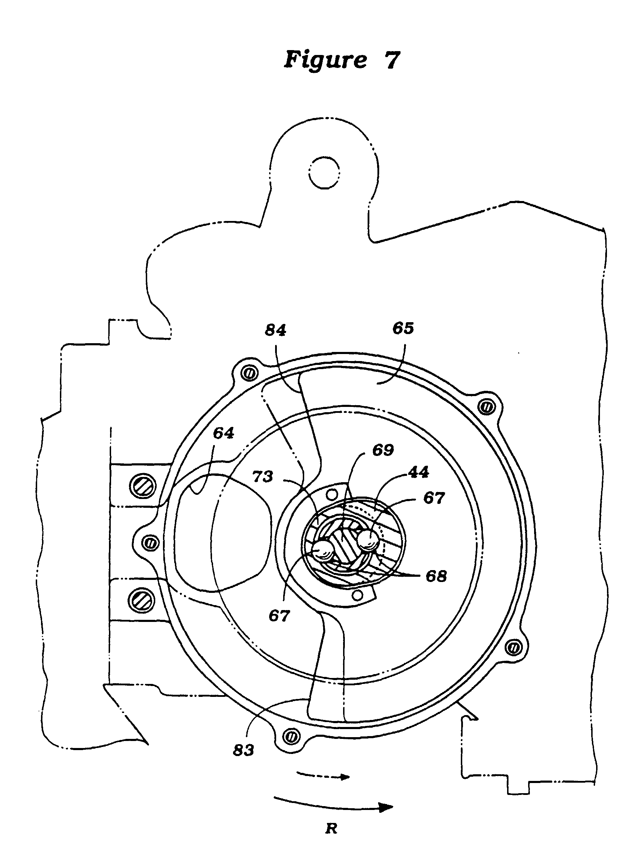

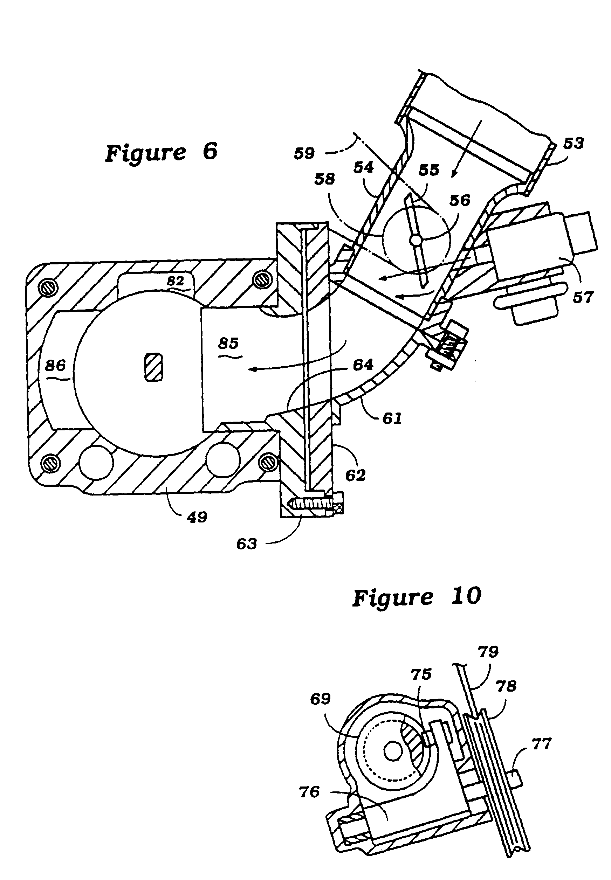

The engine 22 is provided with an induction system which includes an inlet device 51 (Figures 1 and 2) which is generally elongated and which extends along one side of the motorcycle 21, the left side in the illustrated embodiment. The air inlet device 51 has a forwardly facing inlet opening 52 for receiving ram air and delivering it rearwardly. At the rearward end of the inlet device 51, there is provided a generally downwardly extending section 53 which is fitted onto a throttle body shown in most detail in Figures 5 and 6 and indicated generally by the reference numeral 54. The throttle body 54 rotatably journals a throttle valve 55 upon a throttle valve shaft 56. The throttle valve shaft 56 extends in a generally horizontal direction.

A fuel injector, indicated by the reference numeral 57, is mounted in the throttle body 54 and sprays in a generally horizontal direction to the path of air flow as shown best in Figure 6. This will insure good mixing. Also, it should be noted that the throttle body 54 and inlet device portion 53 extend in a generally vertical direction so as to form a downdraft type of induction system. As may be best seen in Figure 2, this arrangement is such that the induction system will be spaced inwardly within the body 37 and not offer any significant interference to the leaning of the motorcycle through an angle α as shown in Figure 2. Thus, unlike prior art constructions embodying horizontally disposed induction systems, the arrangement provides a very compact assembly without offering any flow resistance and, at the same time, providing good induction efficiency and the ability to lean, as aforenoted.

The throttle valve shaft 56 has affixed to an exposed outer end a throttle drum 58 that is connected by means of a wire actuator 59 to a throttle grip (not shown) for controlling the speed of the engine in a known manner.

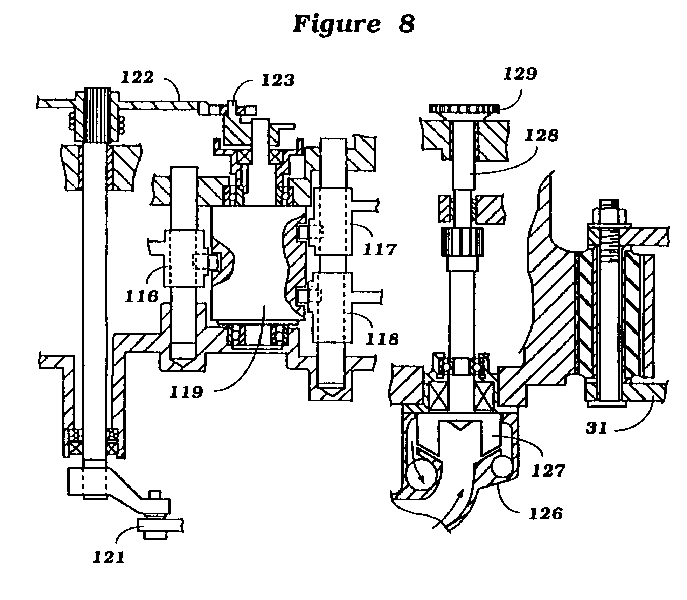

The throttle body 54 communicates with an elbow pipe 61 having a flange 62 that is connected to a rotary valve housing 63 which is, in turn, affixed in a suitable manner to the side of the crankcase 49. As may be seen in Figure 7, the housing 63 and crankcase member 49 define an air inlet port 64 having a cross-sectional configuration as best seen in Figure 7. A rotary valve element 65 is affixed to the crankshaft 44, in a manner to be described, and controls the opening and closing of the air inlet port 64 and, accordingly, the communication of the intake system thus far described with the crankcase chamber 47 of the engine. By use of the rotary valve 65 rather than the conventionally used type of reed type valves for precluding reverse flow, a better induction efficiency can be achieved and the timing of opening and closing of the port 64 can be more accurately controlled. In addition, the connection of the valve 65 to the crankshaft 44 is such so as to permit the timing events to be adjusted so as to suit engine performance and engine running conditions.

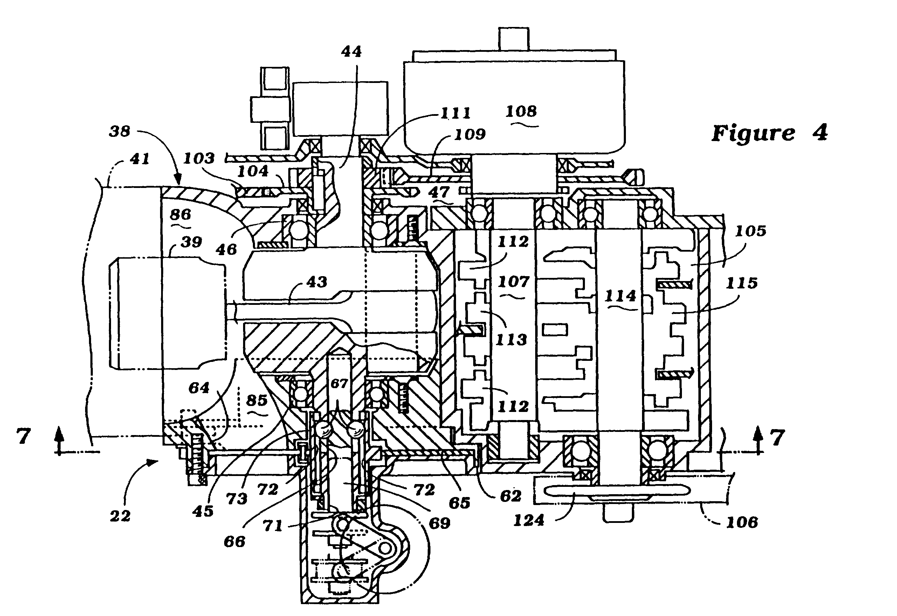

Referring now primarily to Figures 4, 7 and 9, it will be seen that the crankshaft 44 has a pair of elongated slots 66 in which balls 67 are positioned. The balls 67 are, in turn, received within detent recesses 68 formed in a plunger 69 that is slidably supported within a bore 71 formed in the inlet side of the crankshaft 44. The balls 67 also are received within slots 72 formed in a hub 73 of the rotary valve 65. Either or both of the slots 66 or 72 are helically configured so that if the plunger 69 is moved axially within the crankshaft 44, in a manner as will be described, the phase angle between the valve 65 and the crankshaft 44 will be altered.

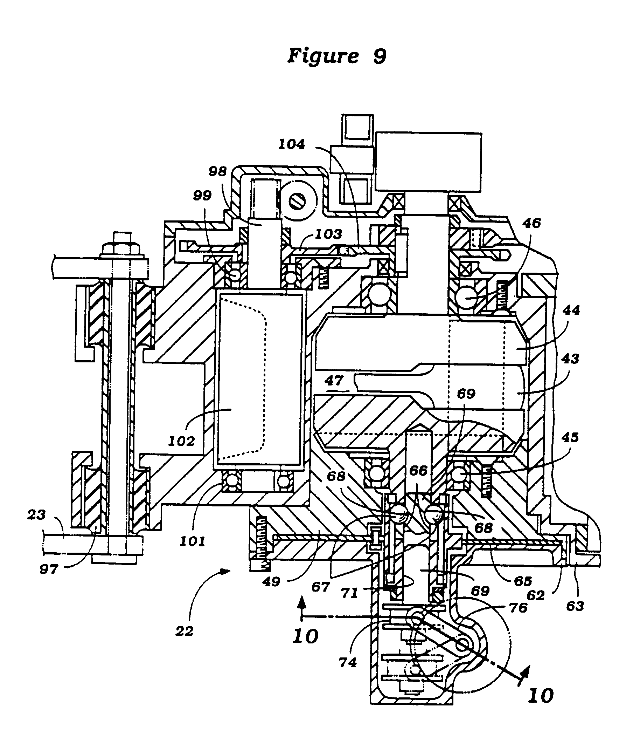

The outer end of the plunger 69 is formed with a grooved portion 74 to receive a follower pin 75 of a cam actuator lever 76. The actuator lever 76 is rotatably journaled within a boss formed in the flange 62 and is affixed to a shaft 77 to which an actuating pulley 78 is affixed. A wire actuator 79 connects this pulley 78 to a servo motor 81 (Figure 1) that is positioned beneath the seat 32 and which is controlled by an CPU (ECU) 82. As the pulley 78 and follower arm 76 are rotated from one position as shown in solid line views in Figures 4 and 9 to the phantom line view position, the cooperation of the balls 67 in the helical slots 66 and/or 72 will cause the phase angle of the plate valve 65 to change from the solid line view shown in Figure 7 to the phantom line view shown in this figure. As a result in this angular change, the intake port 64 will be opened at an earlier point, assuming a counterclockwise direction of rotation as seen in Figure 7 where the direction of rotation is indicated by the arrow R, and to be closed at an earlier point. In this way, the time of opening and closing of the intake port 64 can easily be changed since the leading and trailing edges 83 and 84 of the valve 65 will open and close the port 64 at different angular relationships. Thus, a greater degree of overlap can be achieved when operating at high speeds and high loads than when low speeds and low loads and engine performance can be improved. Also, since the servo motor 81 is utilized to operate the valve 65, no power of the engine will be consumed by this operation.

As may be seen in Figures 5 and 6, the port 64 leads into a first scavenge passage 85 and additional scavenge passages 86 and 87 communicate the crankcase chamber with the area above the piston as is conventional with two cycle practice for transferring the charge from the crankcase chamber 47 to the combustion chamber for firing by the spark plug aforenoted.

The burned charge is discharged through an exhaust port (not shown) in which an exhaust control valve is positioned. This exhaust control valve is contained within an exhaust control valve housing 87 and operates to control the opening and closing of the exhaust port relative to the motion of the piston 39, as is well known. A pulley 88 is affixed to the shaft 89 of this exhaust control valve and is operated by a further servo motor 91 positioned beneath the seat 32 and actuated by means of wire actuators 92. As a result, the timing of both the intake and exhaust ports can be tuned by a suitable control circuitry and strategy so as to optimize engine performance.

The exhaust gases which exit past the exhaust control valve, as thus far described, pass into an exhaust pipe 93 that extends from the cylinder block 38 downwardly and then rearwardly to join into an expansion chamber 94 and eventually a muffler 95 for discharge to the atmosphere through a tail pipe 96. An exhaust hanger 97' suspends the exhaust system thus far described from the frame 23 in a known manner.

The engine 22 is mounted within the frame assembly 23 in any suitable manner and one of the supports is provided by a boss assembly that receives an elastomeric support 97 (Figures 3 and 9) for carrying the engine in the frame 23.

The engine is also provided with a balancer shaft 98 that is journaled within the crankcase 49 by means of a pair of spaced apart bearings 99 and 101 and which carries an eccentric mass 102 for balancing the engine. This eccentric mass 102 is driven at crankshaft speed by means of a gear 103 affixed to the shaft 98 and a gear 104 affixed suitably to the crankshaft 44.

As is typical with motorcycle practice, a change speed transmission, shown in most detail in Figures 4 and 8 and identified by the reference numeral 105, is driven by the engine crankshaft 44 for driving the rear wheel 32 through a drive chain 106 (Figure 1). This change speed transmission 105 includes a primary shaft 107 that is driven from the crankshaft 44 by a clutch 108. The driven disc of the clutch 108 is affixed for rotation with a gear 109 which meshes with a gear 111 that is fixed to the crankshaft 44 adjacent the gear 104. A plurality of gears 112 are journaled for rotation on the primary shaft 107 and can be clutched into engagement with the shaft through a dog clutching arrangement 113. The primary gears 112 are intermeshed with driven gears carried on a secondary transmission 114 and which are coupled to this shaft by means of a dog clutching sleeve 115. The dog clutching sleeves 114 and 115 are operated by means of shift forks 116, 117 and 118 by means of a shift drum 119 that is rotatably journaled within the transmission in a known manner. A shift pedal 121 is connected to the shifting drum 119 by means of a cam ring 122 and follower 123 for rotating the drum 119 and selecting the desired speed ratio for the secondary shaft 114.

The exposed end of the secondary shaft 114 carries a drive sprocket 124 that drives the chain 106.

In the illustrated embodiment, the engine 22 is water cooled and to that end a cooling radiator 125 (Figure 1) is carried by the frame assembly 23. Coolant is circulated through the radiator 124 and cooling jacket of the engine 22 by a coolant pump 126 mounted to the rear of the transmission and which appears best in Figure 8. This water pump 126 includes an impeller 127 that is fixed to a shaft 128 which is suitably driven from the crankshaft 44 and which has a drive gear 129 for this purpose.

Portions of the engine cooling jacket appear in Figure 5 wherein the water conduits therefor are indicated by the reference numerals 131 and 132.

From the foregoing description it should be readily apparent that the induction system for the engine permits the engine to be employed easily in a motorcycle that can be leaned to a large extent for cornering without interference from the induction system due to its updraft nature. Also, the fuel injector for the induction system is positioned in such a way that it can inject almost at a cross flow to the air flow through the induction passage so as to improve fuel atomization. In addition, a rotary valve is provided for controlling the opening and closing of the intake port and, accordingly, permitting a power increase while at the same time affording adjustment of valve timing in a simple manner and through the power of a servo motor rather than extracting power from the driving engine.

## Claims

1. A combination of motorcycle and two-stroke cycle internal combustion engine, said engine (22) being inbuilt as a transverse engine having a crankshaft (44) disposed transversely to the longitudinal centre line of the motorcycle (21), an intake apparatus including an intake port (64) formed in the side of the engine (22) for delivering an intake charge to said engine (22), a rotary valve plate (65) rotatably journaled relative to said intake port (64) for sequentially opening and closing said intake port (64), and drive means (66,67,68,69,72,73) for driving said rotary valve plate (65) in sequence with said crankshaft (44),
**characterized in that**
said drive means includes a helical connection (66,68,69,72) for varying the angular position of said rotary valve plate (65) relative to said crankshaft (44) for adjusting the timing of opening and closing the intake port (64), said helical connection comprising a plunger (69) slidably supported within the crankshaft (44) and operated by an actuator lever (76), said actuator lever (76) having a follower pin (75) received in a grooved portion (74) of said plunger (69), said actuator lever (76) being affixed to a shaft (77), said shaft (77) being rotatably journaled within a boss formed in a flange (62), an actuating pulley (78) being affixed to said shaft (77) for providing a connection between said actuating pulley (78) and said shaft (77) and a wire actuator (79) connecting said actuating pulley (78) to a power means (81), said power means (81) being controlled by a CPU (82) for varying valve timing in response to engine characteristics.

2. A combination of motorcycle and two cycle internal combustion engine as claimed in claim 1, **characterised in that** said helical connection further comprises a first pair of elongated slots (66) of the crankshaft (44), detent balls (67) engaging the elongated slots (66) as well as detent recesses (68) formed in the plunger (69) and engaging second pair of slots (72) formed in a hub (73) of the rotary valve plate (65), either or both of said first and said second slots (66,72) being helically configured.

3. A combination of motorcycle and two cycle internal combustion engine as claimed in claim 1 or 2, **characterised by** a horizontally disposed fuel injector (57) for injecting fuel into a vertically extending intake pipe (53,54) connected to said intake port (64).

4. A combination of motorcycle and two cycle internal combustion engine as claimed in claim 3, **characterised by** a throttle valve (55) in the intake pipe (53,54) rotatable by the horizontally disposed axis and disposed adjacent the fuel injector (57).

## Patentansprüche

1. Kombination aus Kraftrad und Zweitakt-Brennkraftmaschine, wobei die Maschine (22) als Quermotor mit einer quer zur Längsmittellinie des Kraftrades (21) angeordneten Kurbelwelle (44), einer Einlaß-Vorrichtung mit einer in der Seitenwand der Maschine (22) ausgebildeten Einlaßöffnung (64), um der Maschine eine Einlaßladung zuzuliefern, einer relativ zur Einlaßöffnung (64) drehbar gelagerten Drehventilplatte (65) zum sequentiellen Öffnen und Schließen der Einlaßöffnung (64), und einer Antriebseinrichtung (66,67,68,69,72,73) zum Antreiben der Drehventilplatte (65) in Abfolge mit der Kurbelwelle (44) eingebaut ist,
**dadurch gekennzeichnet, daß**
die Antriebseinrichtung eine wendelförmige Verbindung (66,68,69,72) zum Verändern der Winkelposition der Drehventilplatte (65) relativ zu der Kurbelwelle (44) enthält, um den Zeitpunkt des Öffnens und Schließens der Einlaßöffnung (64) einzustellen, wobei die wendelförmige Verbindung einen gleitbar innerhalb der Kurbelwelle (44) gelagerten Kolben (69) aufweist, der durch einen Betätigungshebel (76) betätigt wird, wobei der Betätigungshebel (76) einen in einem Nutabschnitt (74) des Kolbens (69) aufgenommenen Folgestift (75) aufweist, der Betätigungshebel (76) an einer Welle (77) befestigt ist, die Welle (77) drehbar innerhalb eines in einem Flansch (62) ausgebildeten Klotzes gelagert ist, eine Stellriemenscheibe (78) an der Welle (77) befestigt ist, um eine Verbindung zwischen der Stellriemenscheibe (78) und der Welle (77) zu schaffen, und ein Drahtbetätigungsglied (79) die Stellriemenscheibe (78) mit einer Leistungsabgabeeinrichtung (81) verbindet, wobei die Leistungsabgabeeinrichtung (81) durch eine CPU (82) zum Verändern des Ventilzeitpunktes in Abhängigkeit von Motorkennwerten gesteuert wird.

2. Kombination aus Kraftrad und Zweitakt-Brennkraftmaschine nach Anspruch 1, **dadurch gekennzeichnet, daß** die wendelförmige Verbindung außerdem ein erstes Paar länglicher Schlitze (66) der Kurbelwelle (44) und Rastkugeln (67) aufweist, die mit den länglichen Schlitzen (66) wie auch mit in dem Kolben (69) ausgebildeten Rastvertiefungen (68) und mit einem zweiten Paar in einer Nabe (73) der Drehventilplatte (65) ausgebildeter Schlitze in Eingriff stehen, wobei entweder der erste oder der zweite Schlitz (66, 72) oder beide wendelförmig ausgebildet sind.

3. Kombination aus Kraftrad und Zweitakt-Brennkraftmaschine nach Anspruch 1 oder 2, **gekennzeichnet durch** einen horizontal angeordneten Kraftstoffinjektor (57) zum Einspritzen von Kraftstoff in ein mit dem Einlaßanschluß (64) verbundenes, sich vertikal erstreckendes Einlaßrohr (53, 54).

4. Kombination aus Kraftrad aus Zweitakt-Brennkraftmaschine nach Anspruch 3, **gekennzeichnet durch** ein Drosselventil (55) in dem Einlaßrohr (53,54), das mittels der horizontal angeordneten Achse drehbar und zum Kraftstoffinjektor (57) benachbart angeordnet ist.

## Revendications

1. Combinaison de motocyclette et de moteur à combustion interne deux temps, ledit moteur (22) étant intégré en tant que moteur transversal ayant un vilebrequin (44) disposé transversalement par rapport à la ligne centrale longitudinale de la motocyclette (21), un dispositif d'admission incluant une ouverture d'admission (64) formée sur le côté du moteur (22) pour délivrer une charge d'admission audit moteur (22), un plateau de vanne rotative (65) pouvant tourner sur palier par rapport à ladite ouverture d'admission (64) pour ouvrir et fermer séquentiellement ladite ouverture d'admission (64), et des moyens de commande (66, 67, 68, 69, 72, 73) pour commander ledit plateau de vanne rotative (65) en séquence avec ledit vilebrequin (44),
**caractérisée en ce que**
ledit moyen de commande inclut une connexion hélicoïdale (66, 68, 69, 72) pour faire varier la position angulaire dudit plateau de vanne rotative (65) par rapport audit vilebrequin (44) afin d'ajuster la durée d'ouverture et de fermeture de l'ouverture d'admission (64), ladite connexion hélicoïdale comprenant un piston (69) supporté de façon coulissante dans le vilebrequin (44) et commandé par un levier poussoir (76), ledit levier poussoir (76) ayant un doigt suiveur (75) reçu dans une portion rainurée (74) dudit piston (69), ledit levier poussoir (76) étant fixé à un arbre (77), ledit arbre (77) étant tourillonné de façon rotative dans un moyeu formé dans une bride (62), une poulie d'entraînement (78) étant fixée audit arbre (77) pour fournir une connexion entre ladite poulie d'entraînement (78) et ledit arbre (77) et un actionneur à câble (79) reliant ladite poulie d'entraînement (78) à un moyen de puissance (81), ledit moyen de puissance (81) étant régulé par une unité centrale de traitement (82) pour faire varier la synchronisation de la vanne en réponse à des caractéristiques du moteur.

2. Combinaison de motocyclette et de moteur à combustion interne deux temps selon la revendication 1, **caractérisée en ce que** ladite connexion hélicoïdale comprend de plus une première paire de fentes allongées (66) du vilebrequin (44), des billes d'encliquetage (67) en prise avec les fentes allongées (66) ainsi qu'avec des gorges d'encliquetage (68) formées dans le piston (69) et en prise avec une seconde paire de fentes (72) formées dans un moyeu (73) du plateau de vanne rotative (65), l'une desdites première et deuxième fentes ou les deux (66, 72) étant hélicoïdalement configurées.

3. Combinaison de motocyclette et de moteur à combustion interne deux temps selon la revendication 1 ou 2, **caractérisée par** un injecteur de carburant disposé horizontalement (57) pour injecter le carburant dans un tuyau d'admission s'étendant verticalement (53, 54) connecté à ladite ouverture d'admission (64).

4. Combinaison de motocyclette et de moteur à combustion interne deux temps selon la revendication 3, **caractérisée par** un papillon des gaz (55) dans le tuyau d'admission (53, 54) pouvant tourner grâce à l'axe disposé horizontalement et disposé de façon adjacente à l'injecteur de carburant (57).
